# EUROPEAN PATENT APPLICATION

(11) **EP 0 645 869 A1**
(43) Date of publication of application: **29.03.1995**
(21) Application number: 94307101.9
(22) Date of filing: 28.09.1994
(51) Int. Cl.: H02J 7/10, H02J 7/04

(54) **Battery recharger**

(30) Priority: 28.09.1993 US 128823
(71) Applicant: IMED CORPORATION, San Diego California 92131 (US)
(72) Inventor: Deckert, Clint, Poway, California 92064 (US); Wilson, Larry L., Poway, California 92064 (US)
(74) Representative: Coxon, Philip

(57) **Abstract**

A battery charging device is provided which uses a charging circuit monitored and controlled by a current detector (14) and a logic circuit. The charging circuit has a voltage source (18) capable of providing a maximum charging voltage and a maintenance voltage to a battery. The current in the charging circuit is monitored by the current detector (14). As the battery is charging the current in the charging circuit eventually drops below a predetermined threshold current at which time the current detector signals a timer (28). Upon receiving this signal from the current detector (14), the timer provides an output which maintains the voltage source at the maximum charging voltage until a predetermined time interval has expired. When the time interval expires, the timer output changes which lowers the voltage provided to the battery to a level which maintains the charge in the battery without drying out the battery.

## Description

### TECHNICAL FIELD

The present invention pertains to devices for recharging batteries. More specifically, the present invention pertains to devices for recharging and maintaining the charge of the batteries. The present invention is particularly, but not exclusively, useful for recharging batteries in medical devices such as IV pumps.

### BACKGROUND OF THE INVENTION

It is well known that batteries lose their charge, and therefore their effectiveness as the result of use or passage of time. Accordingly, batteries periodically need to be either replaced or recharged. Because batteries are often expensive or difficult to replace, it is desirable to be able to recharge them. Moreover, it is preferable to perform the recharging while the batteries remain in the device in which they are used.

Typically, to recharge a battery a voltage source is attached to the terminals of the battery. Using the voltage source, the voltage across the terminals of the battery is increased until a current flows through the battery which is sufficient to relocate electrons within the chemical components of the battery. This relocations of electrons recharges the battery.

The time required to recharge a particular battery is difficult to determine precisely and is dependant on a number of factors. These factors include the level of the current passing through the battery, the level of charge in the battery at the time of recharging, as well as the physical condition of the battery itself. For these reasons, basic recharging systems assume average values for the above-mentioned factors and use an average recharge time. Because average values are used, some batteries are over-charged while others are under-charged. Both of these conditions are undesirable. On the one hand, undercharging a battery results in a shorter battery useful life. On the other hand, over-charging also decreases the useful life of a battery by drying out the electrolyte in the cells.

It is known that to charge a battery to a level where it has the same useful life as it originally had, the battery charge must be increased to approximately 105% of the original charge. As those skilled in the art will appreciate, the additional charge requirement is the result of increasing inefficiencies in the battery as it becomes older. Moreover, it is known that the time to recharge a battery is directly dependent on the voltage applied across the battery. More, specifically, a higher voltage applied to the battery results in a higher current flowing through the battery. This higher current increases the rate of electron relocation in the battery and the battery achieves a fully charged state more rapidly.

Increasing the charging rate by increasing the voltage is of course limited. If too high a voltage is applied, the resulting current will produce an excessive amount of heat which cannot be properly dissipated and which permanently damages the components of the battery. Accordingly, batteries have a maximum recharge voltage which is the highest recharging voltage that can be applied to the battery without damaging the battery itself.

With the foregoing in mind, prior recharging systems have attempted to maximize recharging of a battery without overcharging. In other words, recharging systems in the past have attempted to achieve the 105% charge.

The earliest recharging devices simply applied a voltage for a set period of time. Both the voltage applied and the duration of application were based on the average battery factors mentioned above. These recharging systems recharged batteries with a low degree of accuracy and often either over-charged or under-charged batteries.

It soon became known that if the voltage applied across the battery is maintained constant, the current passing through the battery will decrease over time. Knowing this, more sophisticated devices were quickly developed which automatically shut themselves off when the current decreased to a particular level.

These improved current monitoring devices typically apply a recharging voltage to the battery which is less than the battery's maximum charging voltage. This voltage is applied to the battery until the current passing through the battery drops below a threshold current, at which time the charging is stopped. Because this threshold current is set based on average battery factors, the recharging system still remains somewhat inaccurate.

To compensate for this inaccuracy, most of the recharging systems are set to recharge the batteries less than the 105% level discussed above. In other words, damage to the battery by possible over-charging is prevented by setting the device to under-charge the average battery.

As noted above, batteries not only discharge during use, they also discharge over time regardless whether the battery is used. As battery technology improved, it became apparent that the life of a battery could be increased if the battery charge was maintained at or near a full charge. For this reason, recharging devices have been developed which both recharge a battery after use and also maintain the charge level at the fully charged level during non-use periods. These devices are typically known as dual state recharging devices. As the name implies, the devices have two operational states, a recharging state and a maintenance state. The dual state devices are similar to the devices discussed above, namely they recharge until a threshold current in the battery has been reached. Upon reaching the threshold current, the dual state devices switch to a lower voltage resulting in an extremely low current being passed through the battery. This low current is just enough to compensate for the charge lost during non-use, i.e., maintain the battery charge. This maintenance current is on the other hand insufficient to increase the charge from for example 90% up to 95%. Unfortunately, the dual state devices, while increasing the storage life of the battery, still only charge a battery to a level which is less than the original charge level. This is because of the inaccuracies resulting from basing the threshold current setting on average battery factors.

In light of the foregoing it is an object of the present invention to provide a device for recharging batteries which increases the charge in the battery to a level slightly higher than the original battery charge level. Another object of the present invention is to provide a recharging device which minimizes the likelihood of over-charging the battery. Yet another object of the present invention is to provide a charging device which minimizes charging time. And yet another object of the present invention is to provide a device for charging batteries which, after fully recharging the battery, converts from increasing the charge in the battery to maintaining the charge in the battery during non-use. A further object of the present invention is to provide a device which is relatively easy to manufacture and is comparatively economical.

### SUMMARY OF THE INVENTION

The present invention provides a device for recharging batteries. Generally, the device includes a charging circuit which is connected to and automatically controlled by a logic circuit and a current detector.

More specifically, the charging circuit includes a voltage source which is connectable in series to the terminals of the battery to be recharged. The voltage source has two preset output voltage levels. The first voltage level is the maximum recharge voltage of the battery to be recharged. This voltage is applied to the battery when the battery needs recharging after use. The second voltage level is the voltage which will maintain the charge in the battery during non-use. Typically, this voltage is applied to the battery whenever the first voltage is not being applied. Also included in the voltage source is a standard current limiter which prevents unacceptably high current levels in the charging circuit. The voltage source is remotely controlled by the logic circuit to supply either the first or the second output voltage level depending on the current in the charging circuit.

The current in the charging circuit which results from the voltage being applied across the battery is monitored by a current detector. This detector provides a digital output having two possible logic states corresponding to the current in the charging circuit. The first logic state is provided as long as the current in the charging circuit is equal to or above a threshold current level. The second logic state is provided whenever the current in the circuit is below the threshold current level. These logic state outputs are provided to a logic circuit which is connected to the current detector output.

The logic circuit includes a timer, a logic state invertor and a logic gate. The output of the current detector is provided as the input to the timer and also one of the inputs to the logic gate. As long as the current detector provides the first logic state indicating the current in the charging circuit is above the threshold current, the timer resets itself and provides an output which is a first logic state. On the other hand, when the timer receives the second logic state output from the current detector, the timer begins timing a time interval and the timer output changes to a second logic state. When the time interval exceeds a predetermined time interval the timer output changes from the second logic state back to the first logic state.

The timer output logic states are provided as inputs to the logic state invertor. The invertor "inverts" the logic state received at its input by providing a logic state output which is the opposite logic state of the input to the invertor. This invertor output is provided to the logic gate as the second input to the logic gate.

The logic state output of the logic gate is dependant on the inputs received from the current detector and the logic state invertor. If either the current detector output is the first logic state or the timer output is the second logic state, i.e. the current is above the threshold or the time interval has not yet exceeded the predetermined interval, then the output of the logic gate directs the voltage supply to maintain the first output voltage level and continues charging the battery. Otherwise, the logic gate directs the voltage source to reduce the output voltage to the second predetermined output voltage level to maintain the charge of the battery.

The predetermined output levels of the voltage source, as well as the predetermined time interval, are tailored to correspond to the particular type of battery being recharged. The threshold current setting in the current detector is set recognizing that the time to increase the battery charge the final 15-25% is relatively constant. This threshold is set such that the output of the current detector changes when the battery is within 15-25% of the desired level of charge, i.e., 105%.

Prior to reaching the current threshold in the charging circuit, the voltage source is at the first output level which is the maximum charging voltage. When the current in the charging circuit drops below the threshold current, the detector output changes and the timer begins tracking a time interval while the device continues to charge the battery at the maximum charging voltage. This timed interval is compared to the predetermined time interval required to increase the charge of the battery the final 15-25%.

As soon as the timed interval exceeds the predetermined time interval, the voltage applied to the battery is reduced to the second output level which is the maintenance level. In this manner, the maximum charging voltage is applied to the battery for the longest time possible without over-charging the battery.

The novel features of this invention, as well as the invention itself, both as to its structure and its operation will be best understood from the accompanying drawings, taken in conjunction with the accompanying description, in which similar reference characters refer to similar parts, and in which:

### BRIEF DESCRIPTION OF THE DRAWINGS

FIG. 1 is a block diagram of the present invention shown connected to a battery;
FIGS. 2A-C are graphic comparisons of a typical recharging cycle between the present invention and a typical dual state charging device, respectively, in terms of the voltage across a battery, current through a battery and charge in a battery;
FIGS. 3A and 3B are graphic representations showing how increases in the charging voltage decreases the charging time; and
FIG. 4 is a logic chart for the logic circuit of the present invention during a normal recharging cycle.

### DESCRIPTION OF PREFERRED EMBODIMENTS

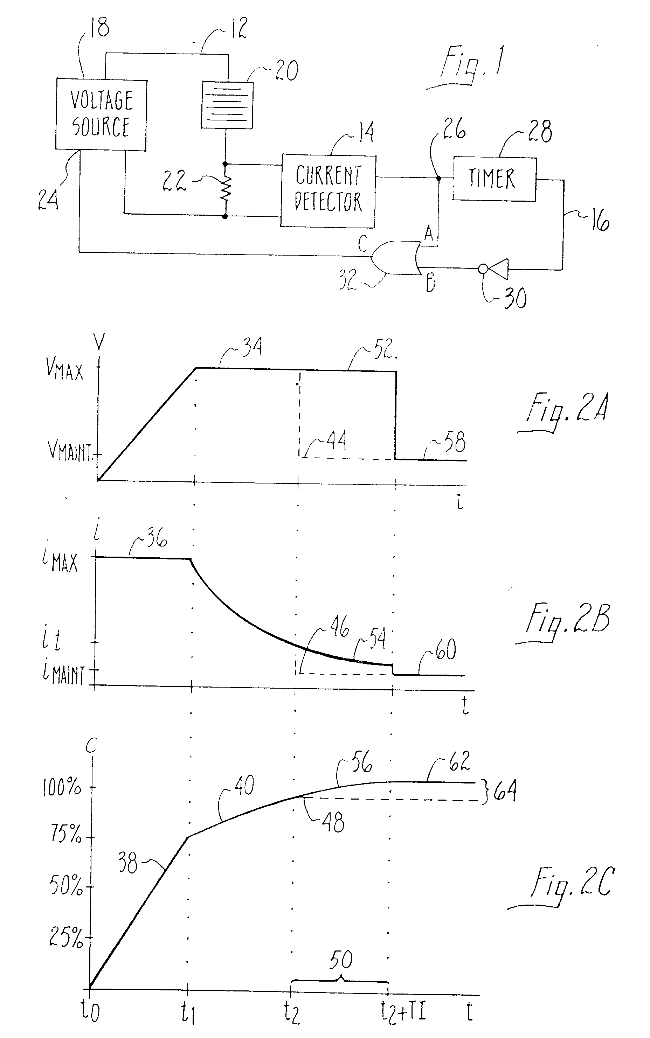

Referring initially to FIG. 1, the battery recharging device of the present invention is shown and generally designated 10. Generally, the present invention comprises a charging circuit 12, a current detector 14 and a logic circuit 16.

Charging circuit 12 includes, in series, a voltage source 18 having one of its terminals connected to the battery 20 to be recharged which is connected to a resistor 22 which is connected to the other terminal of the voltage source 18. Voltage source 18 must be capable of producing a maximum charging voltage and a maintenance voltage which corresponds to the battery 20 to be charged. To recharge a six (6) volt battery, for example, the voltage source 18 must be capable of providing output voltages of 7.4 volts and 6.9 volts. Preferably voltage source 18 includes a digital input port 24 which is capable of receiving input directing the voltage source 18 to provide the maximum charging voltage or the maintenance voltage.

The current detector 14 is connected to the charging circuit 12 on both sides of the resistor 22. Preferably the resistance in resistor 22 is low to minimize the power loss across the resistor. While resistor 22 is depicted outside the current detector 14, it is within the scope of the present invention that the resistor is an internal component of current detector 14. Current detector 14 capable of using the voltage drop across resistor 22 to determine the current in the charging circuit 12. Preferably, current detector 14 has a digital output which provides a first and a second logic state. The logic states are commonly referred to as high and low states and are typically a binary 1 or 0. Current detector 14 has a predetermined set point or threshold current for comparison with the current in the charging circuit. This threshold current is the current at which the output of detector 14 switches from one logic state to the other. Preferably, as long as the current in the charging circuit is at or above the threshold current, the output of the current detector 14 will be a binary 1 and when the current is below the threshold current the output will be a binary 0. The output of the current detector is provided to the logic circuit at a node 26.

The logic state of the current detector output is the input to the timer 28. Timer 28 is well known and includes a predetermined time interval for comparison purposes. The predetermined time interval is preset in the timer and is normally battery type specific. The time interval itself can be determined experimentally. It has been found that while the charging time from start to finish can vary greatly, the time for the last 15-25% of charging is relatively constant. It is the constant nature of the later portion of the charging cycle which allows the accuracy required to recharge at the maximum charging voltage and minimizes the overall charging time.

Timer 28 provides a digital logic state output. Preferably, timer 28 is capable of monitoring the current detector output and as long as the current detector output is a binary 1 then the output of timer 28 is a binary 1 as well and the timer continuously resets itself. If the current detector output is a binary 0, then the timer discontinues resetting, begins tracking a time interval and provides a binary 0 as its output. When the time interval exceeds the predetermined time interval, the output of the timer changes from the binary 0 to a binary 1.

The output of timer 28 is passed through a logic state invertor 30 which is well known in the art. Invertor 30 changes a binary 1 to a binary 0 and vice-versa. The output of invertor 30 provides an input to logic gate 32. The input port connected to the output of invertor 30 is marked "B" in Fig. 1. The other input to the logic gate 32 is the output of current detector 14 coming through node 26. Logic gate 32 is preferably an "or" gate and if either the input at "A" or "B" is a binary 1 the logic gate output at "C" will likewise be a binary 1. Only if both the "A" and the "B" inputs are binary 0's will the logic gate output be a binary 0. The output of logic gate 32 is connected to voltage source 18 at its input port 24. Preferably, if the output of the logic gate 32 is a binary 1 then the output voltage of voltage source 18 is the maximum recharging voltage whereas if the output is a binary 0 then the output voltage is the maintenance voltage.

### OPERATION

Operation of the device of the present invention is shown graphically in Figs. 2A-C. Figs 2A, 2B and 2C show the voltage produced by the voltage source, the current in the charging circuit and the percentage of charge in the battery over time, respectively.

For purposes of clarity the recharging operation will be described in terms of recharging a fully discharged battery, although the present application lends itself equally to recharging partially discharged batteries.

The terminals of the voltage source 18 are connected to the terminals of battery 20 in the customary fashion. The voltage output is increased until the voltage is at the maximum charging voltage at time t₁, at which time the voltage is then held constant.

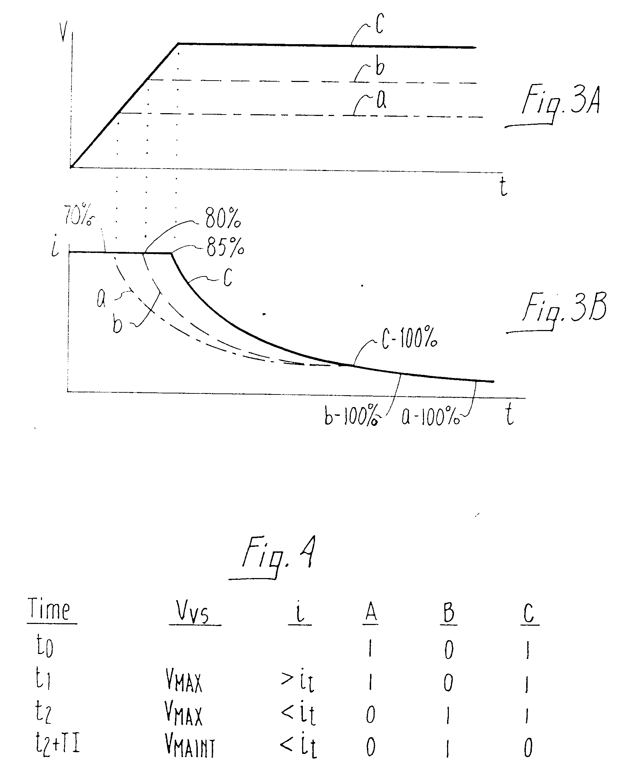

Recharging at the maximum charging voltage is the key to minimizing the recharging time period. Three recharging cycles are shown in Figs. 3A and 3B. Fig. 3A shows the voltage applied across the battery and Fig. 3B shows the current in the charging circuit. Three charging voltage curves are shown in Fig. 3A and are designated a, b and c, where the voltages increase from a to b to c. Three current curves are shown in Fig. 3B which correspond to the voltage curves in Fig. 3A. These current curves are designated a, b and c as well. Comparing the three current curves it is shown that for all three curves the current begins to drop as soon as the charging voltage is reached. The difference is that current curve a begins dropping sooner than b or c. The percentages of full charge in the battery are superimposed on the graphs. Accordingly, it is shown that the current in the a curve begins dropping when the battery charge is at 70% whereas b and c begin dropping at charges of 80% and 85% respectively. This difference results in the batteries reaching 100% charge at different times as well. Current curve a shows the battery reaching 100% later than b or c. This indicates that as the charging voltage is raised, the charging time decreases. Accordingly, to minimize the charging time, the charging voltage is preferably as high as possible.

Referring again to Fig. 2A-C, the maximum charging voltage is designated 34. While the voltage is increasing, the current is maintained at the maximum charging current 36 and the charge in the battery is increasing at 38. From time t₁ to t₂, the voltage is held constant at 34 and the charge in the battery continues to increase at 40 although the current begins to decrease at 42. The foregoing operation is substantially similar to the standard operation of a dual state recharging device.

At time t₂ the differences between the device of the present invention and the a dual state device become apparent. Time t₂ is the time at which the current in the charging circuit has dropped below the threshold current in the current detector 14. At this time, a standard dual state device would reduce the voltage to the maintenance voltage 44 which in turn would drop the current to the maintenance current 46 and the charge in the battery would remain constant at 48. As can be seen in Fig. 2C, the charge in the battery is still below 100% indicating the battery was not fully recharged. At time t₂ the device 10 operates quite differently. Instead of dropping the voltage, the voltage is maintained for a predetermined time interval, TI, designated 50 in Fig. 2C. Time interval 50 varies and is dependant on the battery being recharged. It has been found that the while the time interval from t₀ to t₂ varies significantly within a specific type of battery, the time interval 50 is relatively constant. For this reason, time interval 50 can be determined experimentally and is generally applicable for similar batteries. Maintaining the voltage for this time interval 50 is the key to fully charging the battery in a minimum amount of time and with minimized risk of over-charging the battery.

To maintain the voltage over time interval 50, device 10 uses the logic circuit 16 connected between the current detector 14 and the voltage source 18. In the preferred embodiment, when the charging circuit current drops below threshold current, the output of the current detector changes from a binary 1 to a binary 0. The output of timer 28 is changed to a binary 0 and logic gate 32 receives a binary 1 at "B". The output of the logic gate remains a binary 1 and the voltage is maintained at the maximum charging voltage 50. While the current continues to drop 54, the charge continues to increase at 56 until eventually exceeding 100%. During this time, timer 28 is tracking the time interval until the time interval exceeds the predetermined time interval at time t₂+TI. At time t₂+TI the output of timer 28 changes to a binary 1 which causes the logic gate to change its output to a binary 0 which then causes the voltage source 18 to reduce its output to the maintenance voltage 58. This in turn reduces the current in the charging circuit to the maintenance current 60 and the charge in the battery is maintained at a level in excess of 100%. The change in the final charge of the battery as compared between the standard dual state device and device 10 is significant and is designated 64. A logic chart showing the changes described above is shown in Fig. 4.

If the battery is discharged by use, for example, the current in the charging circuit would increase until the threshold current was again exceeded. At that time, the output of detector 14 would change to a binary 1, the voltage would be increased to the maximum charging voltage and the recharging cycle would again be under way. While the particular battery charging device as herein shown and disclosed in detail is fully capable of obtaining the objects and providing the advantages herein before stated, it is to be understood that it is merely illustrative of the presently preferred embodiments of the invention and that no limitations are intended to the details of the construction or design herein shown other than as defined in the appended claims.

## Claims

1. A device for recharging a battery comprising:
a charging circuit electrically connectable to terminals of said battery, said charging circuit including a variable voltage source for applying a charging voltage across said battery, said charging voltage producing a charging current in said charging circuit, said voltage source including a current limiting means;
a current detector electrically connected to said charging circuit for measuring said charging current said current detector having a digital output;
a means connected to said voltage source for varying said voltage across said battery, said means being dependant on said output of said current detector.

2. The device according to claim 1 wherein said varying means includes a timer having a timer input connected to the output of said current detector, said timer providing a timer output which maintains said voltage across said battery at a first predetermined voltage for a predetermined time interval, said time interval beginning when said charging current goes below said threshold level.

3. The device according to claim 1 or 2 wherein said output of said current detector maintains said voltage across said battery at said first predetermined voltage when said charging current is above said predetermined threshold level.

4. A device for recharging a battery comprising:
a charging circuit electrically connectable to said battery, said charging circuit including a voltage source for providing an output voltage to generate a charging current in said charging circuit;
a current detector electrically connected to said charging circuit for measuring said charging current, said current detector having a digital output dependant on said current, and
a logic circuit electrically connected to said current detector and said voltage source, said logic circuit selecting said output voltage of said voltage source depending on the output of said current detector.

5. The device according to any one of the preceding claims wherein said current detector output indicates whether said charging current is below a predetermined threshold level.

6. The device according to claim 4 wherein said output of said current detector maintains said output voltage of said voltage source at a first predetermined voltage when said current is above said predetermined threshold level.

7. The device according to any one of claims 4 to 6 wherein said logic circuit includes a timer monitoring the output of said current detector, said timer providing a timer output which maintains said output voltage of said voltage source at said first predetermined voltage for a predetermined time interval, said time interval beginning when said current detector output indicates said charging current is below said threshold level.

8. The device according to claim 7 wherein said current detector calculates said charging current after determining a voltage drop over a known resistance in said charging circuit.

9. The device according to claim 2 or 7 wherein said current detector output is a first logic state when said charging current is above said threshold and a second logic state when said charging current is below said threshold.

10. The device according to claim 9 wherein said timer output is a first timer logic state when said current detector output is said first logic state and during said time interval, said timer output changing to a second timer logic state when said time interval expires.

11. The device according to claim 10 wherein said logic circuit further comprises a logic state invertor and a logic gate, said logic state invertor inverting said timer output and providing a first input to said logic gate, said output of said current detector providing a second input to said logic gate, said logic gate having an output providing an input to said voltage source, said input controlling said output voltage of said voltage source.

12. The device according to claim 11 wherein said logic gate output maintains said output voltage at said first predetermined voltage unless said current detector output is said second logic state and said timer output is said second timer logic state.

13. The device according to any one of the preceding claims wherein said battery has a maximum charging voltage and said first predetermined voltage is at least ninety percent (90%) of said maximum charging voltage.

14. The device according to claim 12 wherein said output voltage of said voltage source decreases from said first predetermined voltage to a second predetermined voltage when said current detector output is said second logic state and said timer output is said second timer logic state, said second predetermined voltage being a maintenance voltage sufficient to maintain a charge in said battery, but insufficient to increase said charge in said battery.

15. The device according to any one of claims 2, 3 or 7 to 14 wherein said time interval is sufficient to recharge said battery to at least one hundred percent (100%) of an original charge in said battery.

16. The device according to any one of the preceding claims wherein said voltage source includes a current limiting means.

17. A method of recharging a battery comprising the steps of:
connecting said battery to a charging circuit including a voltage source providing an output voltage across said battery;
increasing said output voltage to a first predetermined voltage;
monitoring a current in said charging circuit resulting from said output voltage with a current detector, said current detector having a digital current detector output indicating whether said current is below a threshold current;
receiving said current detector output at a logic circuit, said logic circuit having a logic circuit output;
controlling said output voltage with said logic circuit output, said logic circuit output maintaining said output voltage at said first predetermined voltage until said current detector output indicates said current is below said threshold current and a predetermined time interval has expired; and then
reducing said output voltage automatically to a second predetermined voltage, said second voltage being a maintenance voltage sufficient to maintain a charge in said battery, but insufficient to increase said charge in said battery.

18. The method as recited in claim 17 wherein said controlling step comprises the sub-steps of:
monitoring said current detector output with a timer, said timer beginning said time interval when said current goes below said threshold current; and
providing a timer output indicating said time interval has expired when said time interval has expired.

19. The method as recited in claim 18 wherein said reducing step comprises the sub-steps of monitoring said timer output and said current detector output at a logic gate, said logic gate providing a logic gate output to said voltage source when said current detector output indicates said current is below said threshold current and said timer output indicates said time interval has expired, said logic gate output reducing said output voltage.
